# EUROPEAN PATENT SPECIFICATION

(11) **EP 3 955 670 B1**
(45) Date of publication and mention of the grant of the patent: **27.12.2023**
(21) Application number: 19951727.7
(22) Date of filing: 07.11.2019
(51) Int. Cl.: H04L 5/00

(54) **METHOD FOR ACTIVATING OR DEACTIVATING SOUNDING REFERENCE SIGNAL RESOURCE, AND DEVICE**
VERFAHREN ZUR AKTIVIERUNG ODER DEAKTIVIERUNG EINER SRS-RESSOURCE UND VORRICHTUNG
PROCÉDÉ D'ACTIVATION OU DE DÉSACTIVATION D'UNE RESSOURCE DE SIGNAL DE RÉFÉRENCE DE SONDAGE, ET DISPOSITIF

(43) Date of publication of application: 16.02.2022
(73) Proprietor: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); SHI, Zhihua, Dongguan, Guangdong 523860 (CN); CHEN, Wenhong, Dongguan, Guangdong 523860 (CN)
(74) Representative: Taor, Simon Edward William
(86) International application number: PCT/CN2019/116405
(87) International publication number: WO 2021/087912

(56) References cited:
- WO-A1-2019/159024
- WO-A1-2019/203711
- CN-A- 110 035 505
- US-A1- 2019 281 588
- HUAWEI ET AL: "Corrections on SP SRS Activation/Deactivation MAC CE", 3GPP DRAFT; R2-1818485 , vol. RAN WG2, no. Spokane, USA; 20181112 - 20181116 2 November 2018 (2018-11-02), XP051482342, Retrieved from the Internet: URL:http://www.3gpp.org/ftp/tsg%5Fran/WG2% 5FRL2/TSGR2%5F104/Docs/R2%2D1818485%2Ezip [retrieved on 2018-11-02]
- ERICSSON ET AL: "Clarification to Serving Cell ID", 3GPP DRAFT; 38321_CR_(REL-15)_R2-1905198 , vol. RAN WG2, no. Xi'an, China; 20190408 - 20190412 2 April 2019 (2019-04-02), XP051709667, Retrieved from the Internet: URL:http://www.3gpp.org/ftp/tsg%5Fran/WG2% 5FRL2/TSGR2%5F105bis/Docs/R2%2D1905198%2Ez ip [retrieved on 2019-04-02]
- SAMSUNG: "Semi-Persistent CSI Reporting and SRS for DRX", 3GPP TSG-RAN WG2 Meeting #101bis, 20 April 2018 (2018-04-20), XP051415405,

## Description

### TECHNICAL FIELD

The present application relates to the field of communications, and in particular to a method and device for activating or deactivating sounding reference signal resources.

### BACKGROUND

A sounding reference signal (SRS) is an uplink signal that is capable of providing a reference for scheduling by a network device. The network device can perform operations such as channel quality detection and estimation, beam management, etc., according to the SRS. The 5th generation (5G) mobile communication system defines a SRS resource set, and each SRS resource set includes at least one SRS resource. One SRS resource can include the following information: the number of antenna ports, the number of orthogonal frequency division multiplexing (OFDM) symbols, a time domain position and a frequency domain position. A terminal device can send the SRS to the network device according to the information in the SRS resource.

The network device can configure one or more SRS resource sets for the terminal device, and activate or deactivate one of the SRS resource sets through a media access control (MAC) control element (CE). Since the SRS resource set is associated with a bandwidth part (BWP), the network device needs to activate or deactivate the SRS resource set corresponding to each BWP. Since the 5G mobile communication system has a relatively large bandwidth, it is inefficient to activate or deactivate the SRS resource set using the above-mentioned scheme. Related technologies are known from a patent application publication no. US2019/281588A1; a non-patent disclosure titled "Corrections on SP SRS Activation/Deactivation MAC CE", 3GPP DRAFT, R2-1818415; and non-patent disclosure titled "Clarification to Serving Cell ID", 3GPP DRAFT, 38321_CR (REL-15)-R2-1905198.

### SUMMARY

The present application provides a method for activating or deactivating a SRS resource, which can improve efficiency of activating or deactivating the SRS resource.

In a first aspect, there is provided a method for activating or deactivating a SRS resource as set out in claim 1. Additional features are set out in claim 2

In an aspect, there is provided a device as set out in claim 3. Additional features are set out in claim 4.

In an aspect, there is provided a computer-readable storage medium having a computer program stored therein, wherein the computer program, when being executed by a processor, causes the processor to carry out the method according to the first aspect.

The scope of the present invention is determined by the scope of the appended claims.

### BRIEF DESCRIPTION OF THE DRAWINGS

FIG. 1 is a schematic diagram of a communication system suitable for the present application;
FIG. 2 is a schematic diagram of a method for activating or deactivating a SRS resource provided by the present application;
FIG. 3 is a schematic diagram of another method for activating or deactivating a SRS resource provided by the present application;
FIG. 4 is a schematic diagram of still another method for activating or deactivating a SRS resource provided by the present application;
FIG. 5 is a schematic diagram of a communication device for activating or deactivating a SRS resource provided by the present application;
FIG. 6 is a schematic diagram of another communication device for activating or deactivating a SRS resource provided by the present application;
FIG. 7 is a schematic diagram of still another communication device for activating or deactivating a SRS resource provided by the present application;
FIG. 8 is a schematic diagram of still another communication device for activating or deactivating a SRS resource provided by the present application;
FIG. 9 is a schematic diagram of still another communication device for activating or deactivating a SRS resource provided by the present application;
FIG. 10 is a schematic diagram of still another communication device for activating or deactivating a SRS resource provided by the present application; and
FIG. 11 is a schematic diagram of a communication apparatus for activating or deactivating a SRS resource provided by the present application.

### DETAILED DESCRIPTION

The technical solutions in the embodiments of the present application will be described clearly and completely with reference to the accompany drawings of the embodiments of the present application. It is apparent that the scope of the present invention is determined by the scope of the appended claims.

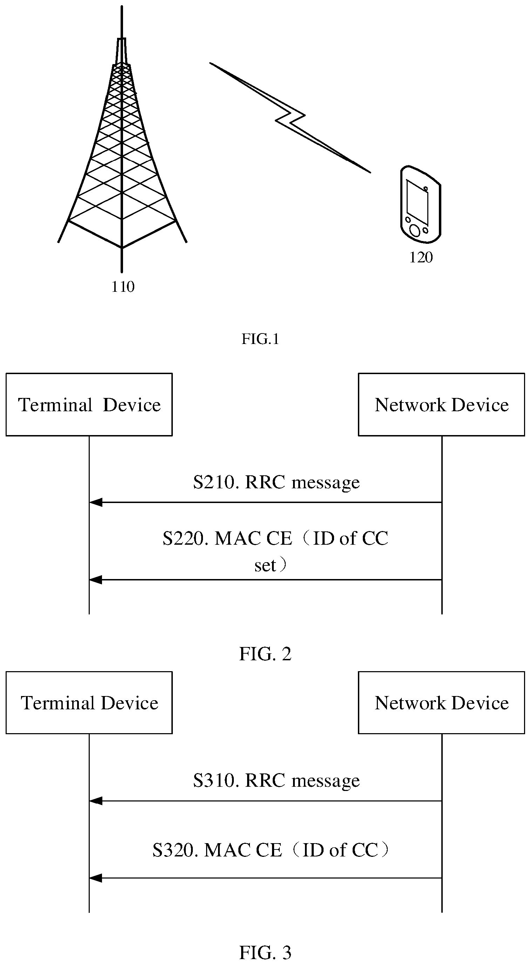

An introduction of an application scenario of the present application is given first. FIG. 1 is a schematic diagram of a communication system suitable for the present application.

A communication system 100 includes a network device 110 and a terminal device 120. The terminal device 120 communicates with the network device 110 through electromagnetic waves.

In the present application, the terminal device 120 may include various handheld devices, vehicle-mounted devices, wearable devices, computing devices, or other processing devices connected to a wireless modem that have wireless communication functions, for example, user equipment (UE), mobile stations (MS), soft terminals, home gateways, set-top boxes, etc. defined by the 3rd generation partnership project (3GPP).

The network device 110 may be a base station defined by 3GPP, for example, a base station (gNB) in a 5G mobile communication system. The network device 110 may also be a non-3GPP access network device, such as an access gateway (AGF). The network device 110 may also be a relay station, an access point, a vehicle-mounted device, a wearable device, and other types of devices.

The communication system 100 is only described by way of example, and the communication system applicable to the present application is not limited to this. For example, the number of network devices and terminal devices included in the communication system 100 may also be other numbers.

In order to obtain reference information required for scheduling downlink transmission, the network device can configure one or more SRS resource sets for the terminal device through a radio resource control (RRC) message, and the number of SRS resources contained in each SRS resource set is related to processing capacity of the terminal device.

One SRS resource set can include multiple SRS resources of the same time domain type, or multiple SRS resources of different time domain types. The multiple SRS resources of the same time domain type are that, for example, the multiple SRS resources are all periodic SRS resources, aperiodic (AP) SRS resources or semi-persistent (SP) SRS resources. The multiple SRS resources of different time domain types are, for example, one AP SRS resource and one SP SRS resource.

For the SRS resource set, the 5G mobile communication system defines four main purposes, which are beam management, codebook, non-codebook, and antenna switching. The SRS resource sets for different usages have different features (for example, the number of SRS resources, and an antenna port). The network device needs to activate or deactivate the SRS resource set based on different purposes.

In the following, a method for activating or deactivating a SRS resource (or a SRS resource set) provided by the present application will be described in detail.

As shown in FIG. 2, the method 200 includes the following.

In S210, the terminal device receives an RRC message from the network device, and the RRC message is used to configure the SRS resource or the SRS resource set.

The SRS resource configured by the RRC message may be a resource in the SRS resource set, or may be a resource that does not belong to the SRS resource set. The SRS resource can be an SP SRS resource or an AP SRS resource. The SRS resource set can be an SP SRS resource set or an AP SRS resource set.

In S220, the terminal device receives a MAC CE from the network device, and the MAC CE includes an identifier (ID) of a component carrier (CC) set, and the MAC CE is used to activate or deactivate the SRS resource or the SRS resource set corresponding to the CC set.

The CC set includes at least one CC, and the CC set may be a list, that is, a CC list, or may be a set in other forms.

The MAC CE may include the ID of the CC set to indicate that the SRS resource or the SRS resource set corresponding to the CC set needs to be activated or deactivated. Since the MAC CE can activate or deactivate the SRS resource or the SRS resource set corresponding to one CC set, and one CC set includes multiple BWPs, it provides higher efficiency and lower signaling overhead compared to a scheme in which SRS resource sets corresponding to BWPs are activated or deactivated one by one.

Table 1 shows a structure of a MAC CE provided by the present application.

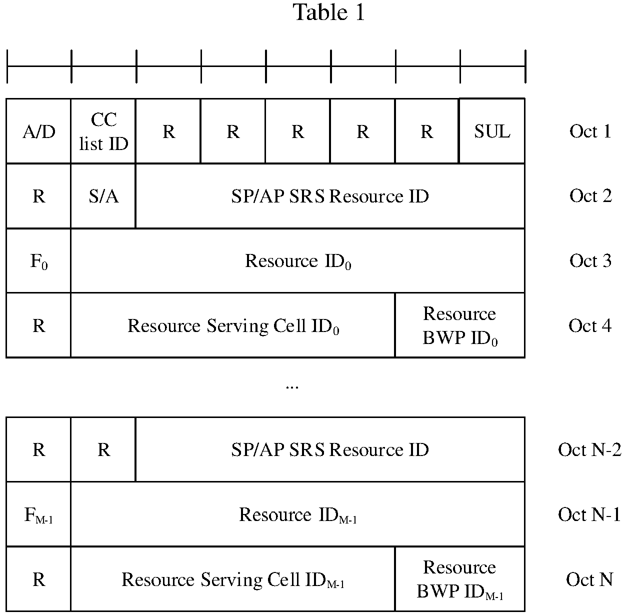

Meanings of fields in the MAC CE shown in the table 1 are as follows:
A/D (Activation/Deactivation): this field indicates whether the MAC CE is used to activate or deactivate the indicated SP/AP SRS resource set. The field is set to "1" to indicate activation, otherwise it indicates deactivation.

SUL (Supplement Uplink Carrier): this field indicates whether the MAC CE applies to a normal uplink (NUL) carrier configuration or a supplement uplink (SUL) carrier configuration. The field is set to "1" to indicate that the MAC CE applies to the SUL carrier configuration, and is set to "0" to indicate that the MAC CE applies to the NUL carrier configuration.

AP/SP SRS Resource ID: semi-persistent/aperiodic sounding reference signal resource ID. The AP/SP SRS resource needs to be activated or deactivated. A length of the field is four bits.

Fᵢ: this field indicates a type of a resource used as a spatial relationship for the SRS resource within an SP/AP SRS resource set identified with the SP/AP SRS Resource ID. F₀ refers to a first SRS resource in the resource set, F₁ refers to a second SRS resource, and so on. The field is set to "1" to indicate that a NZP CSI-RS resource index is used, and the field set is set to "0" to indicate that an SSB index or an SRS resource index is used. A length of the field is 1 bit. The field is only present when the MAC CE is used for activating the SRS resource, that is, when the A/D field is set to "1".

Resource IDᵢ: this field contains an ID of a resource used for spatial relationship derivation for SRS resource i. Resource ID₀ refers to a first SRS resource in the resource set, resource ID₁ refers to a second SRS resource, and so on. If Fᵢ is set to "0" and a first bit of the Resource IDᵢ is set to "1", the remainder of Resource IDᵢ contains *SSB-Index* as specified in TS 38.331 [5], and if Fᵢ is set to "1" and the first bit of Resource IDᵢ is set to "0", the remainder of Resource IDᵢ contains *SRS-ResourceId* as specified in TS 38.331 [5]. The length of the field is 7 bits. This field is only present when MAC CE is used for activating the SRS resource, i.e. when A/D field is set to "1".

Resource Serving Cell Idᵢ: this field indicates an ID of a serving cell on which the resource used for spatial relationship derivation for SRS resource i is located A length of the field is 5 bits.

Resource BWP IDᵢ: the field indicates an uplink BWP as a codepoint of a DCI *bandwidth part indicator* field as specified in TS 38.212, and the uplink BWP is on the resource used for the spatial relationship derivation for the SRS resource i. A length of the field is two bits.

R: Reserved bit, set to "0".

An S/A field is used to indicate whether the SP/AP SRS Resource ID in the MAC CE is an AP SRS resource ID or an SP SRS resource ID. For example, the S/A field being "1" indicates that the SP/AP SRS Resource ID is the AP SRS resource ID; and the S/A field being "0" indicates that the SP/AP SRS Resource ID is the SP SRS resource ID. The network device and the terminal device can distinguish whether the SP/AP SRS Resource ID is the AP SRS resource ID or the SP SRS resource ID through the resource ID or the resource set ID.

For example, the network device configures 64 SRS Resource IDs, the first 32 SRS Resource IDs are AP SRS Resource IDs, and the last 32 SRS Resource IDs are SP SRS Resource IDs. The terminal device can distinguish whether the SP/AP SRS Resource ID is the AP SRS resource ID or the SP SRS resource ID based on such correspondence.

When the MAC CE includes an SP/AP SRS Resource Set ID, the form of the MAC CE can be as shown in table 2.

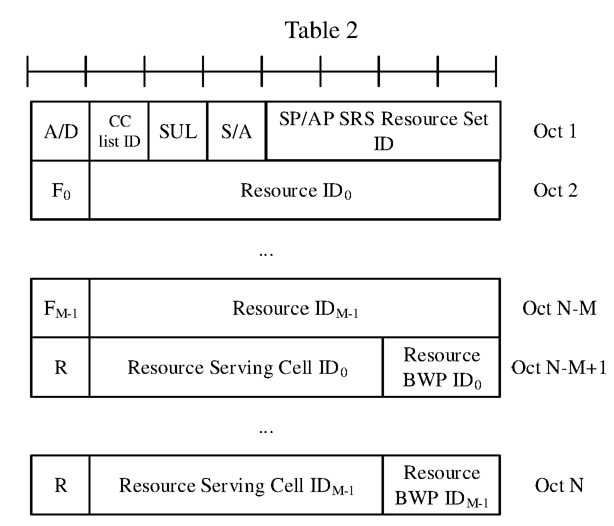

In the table 2, the AP/SP SRS Resource set ID is the semi-persistent/aperiodic sounding reference signal resource set ID. This field indicates an ID of an AP/SP SRS resource identified by *SRS-ResourceSetId* as specified in TS 38.331, and the AP/SP SRS resource is to be activated or deactivated. A length of the field is four bits. The meanings of the remaining fields in the table 2 are the same as those corresponding fields in the table 1.

In some embodiments, the MAC CE in the method 200 may also be in the form shown in table 3 or table 4.

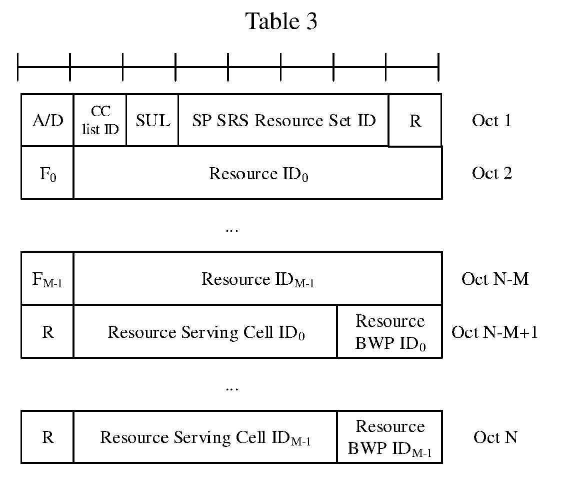

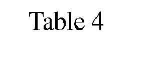

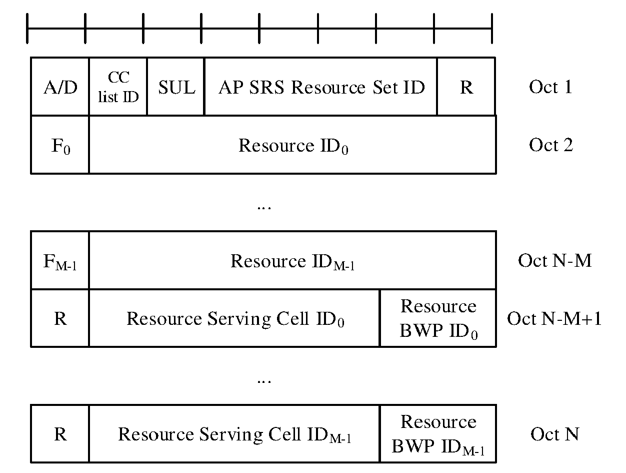

The table 3 and table 4 indicate, by means of predefined fields, whether the SRS resource set ID is the AP SRS resource set ID or the SP SRS resource set ID. Similarly, it is also possible to indicate whether the SRS resource ID is the AP SRS resource ID or the SP SRS resource ID by means of the predefined fields, as shown in table 5 and table 6. In the table 5, the third bit to the eighth bit from the left in Oct2 are predefined as the SP SRS Resource ID field, and the terminal device can determine that the SRS resource ID is the SP SRS resource ID based on this predefined field. In the table 6, the third bit to the eighth bit from the left in Oct2 are predefined as the AP SRS Resource ID field, and the terminal device can determine that the SRS resource ID is the SP SRS resource ID based on this predefined field.

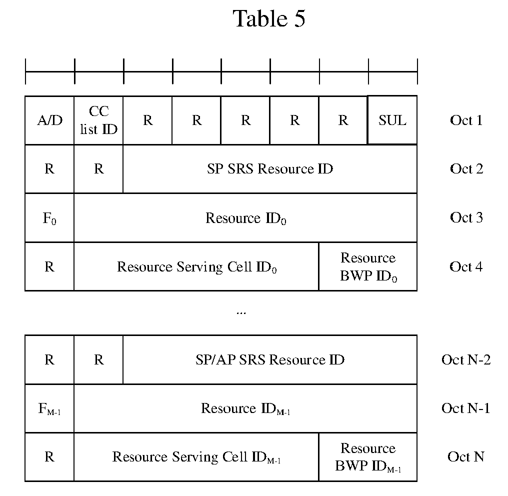

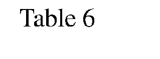

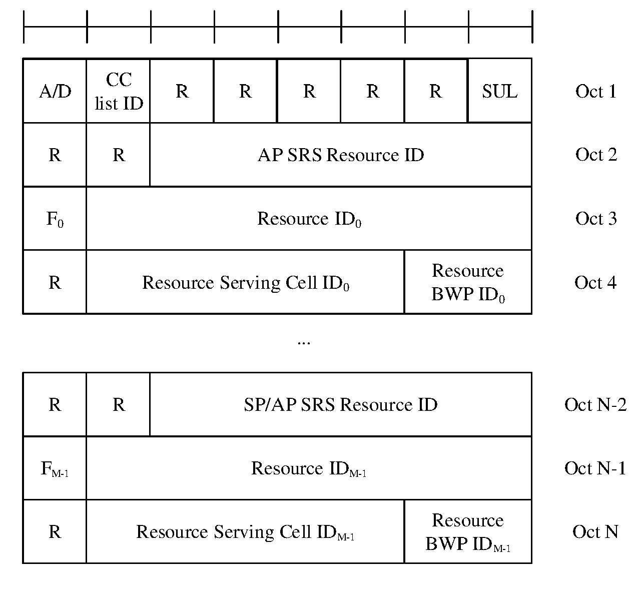

FIG. 3 shows another method for activating or deactivating a SRS resource (or a SRS resource set) provided by the present application. As shown in FIG. 3, the method 300 includes the following.

In S310, the terminal device receives an RRC message from the network device, where the RRC message is used to configure the SRS resource or the SRS resource set.

The SRS resource configured by the RRC message may be a resource in the SRS resource set, or may be a resource that does not belong to the SRS resource set. The SRS resource can be an SP SRS resource or an AP SRS resource. The SRS resource set can be an SP SRS resource set or an AP SRS resource set.

In S320, the terminal device receives a MAC CE from the network device, where the MAC CE includes an identifier of a CC set.

The MAC CE further includes an ID of a SRS resource, and is used to activate or deactivate the SRS resource corresponding to a CC set to which the CC belongs; or
the MAC CE further includes an ID of an SRS resource set, and is used to activate or deactivate the SRS resource set corresponding to the CC set to which the CC belongs.

The CC set includes at least one CC, and the CC set may be a list, that is, a CC list, or may be a set in other forms.

Since the MAC CE can activate or deactivate the SRS resource or the SRS resource set corresponding to one CC set, and one CC set includes multiple BWPs, it provides higher efficiency and lower signaling overhead compared to a scheme in which SRS resource sets corresponding to BWPs are activated or deactivated one by one.

The MAC CE containing the ID of the CC is as shown in table 7. The ID of the CC indicates that spatial relation information (SRI) of all CCs in the CC set is SRI corresponding to the CC.

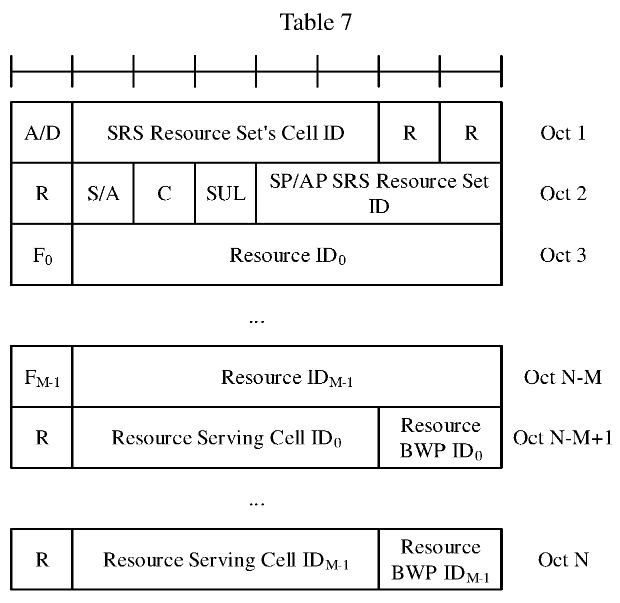

In the table 7, SRS Resource Set's Cell ID is the CC ID, and the CC ID indicates that all CCs in the CC list to which the CC belongs use the MAC CE as shown in the table 7 to activate or deactivate the SRS resource set. "S/A" is used to indicate whether the SP/AP SRS Resource Set ID is the SP SRS Resource Set ID or the AP SRS Resource Set ID.

The meaning of the C field is that this field indicates whether there are eight bits containing the resource serving cell ID field and the resource BWP ID field. If this field is set to "1", there are the eight bits containing the resource serving cell ID field and the resource BWP ID field. If this field is set to "0", the eight bits are not present, and all resources indicated in the resource IDi field are located on the serving cell and BWP indicated by the cell ID of the SRS resource set and the BWP ID field of the SRS resource set.

In some embodiments, the MAC CE may not include the S/A field, and the network device and the terminal device determine whether the SRS resource set ID is the AP SRS resource set ID or the SP SRS resource set ID in a predefined manner, as shown in table 8 and table 9.

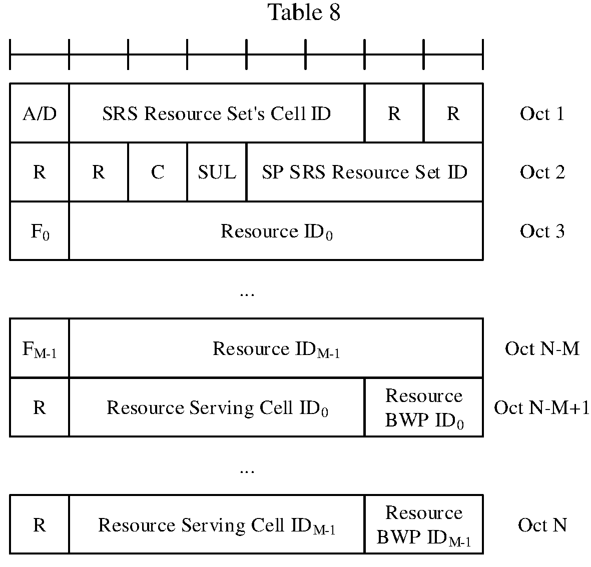

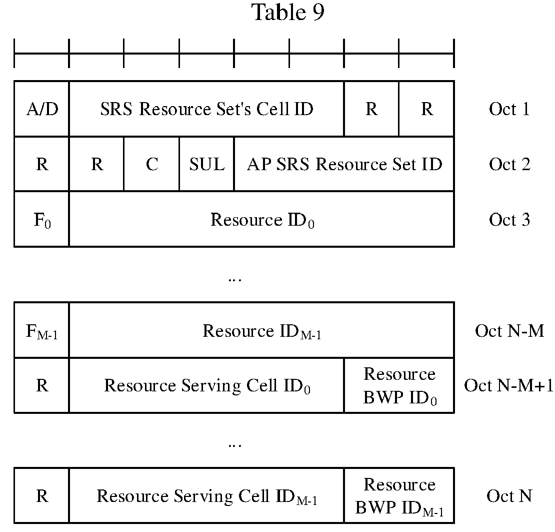

Similarly, the MAC CE including the SRS resource ID and the CC ID can also be designed in the manner as shown in the table 7 to table 9, and the MAC CE is used to activate or deactivate the SRS resource corresponding to the CC set to which the CC belongs, as shown in table 10 to table 12.

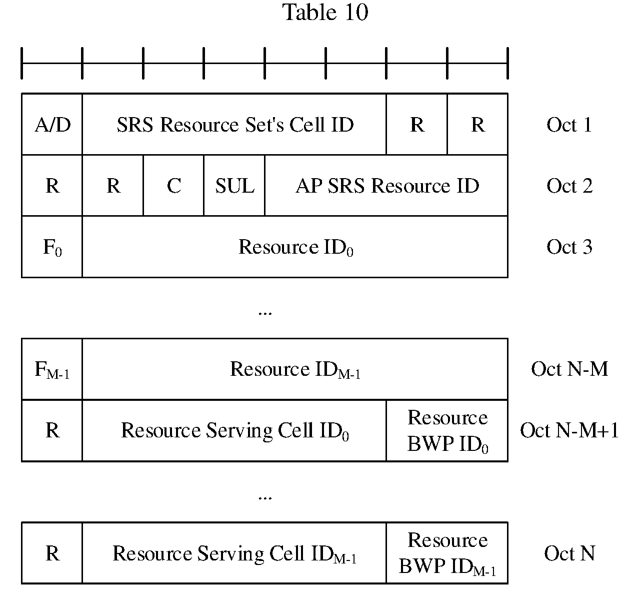

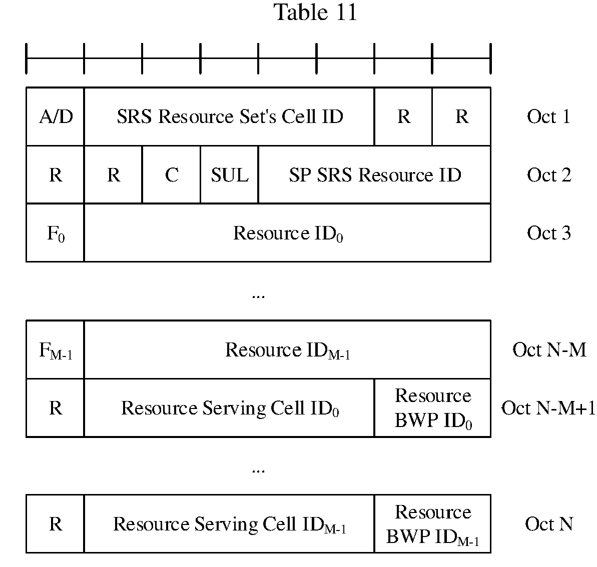

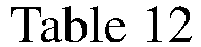

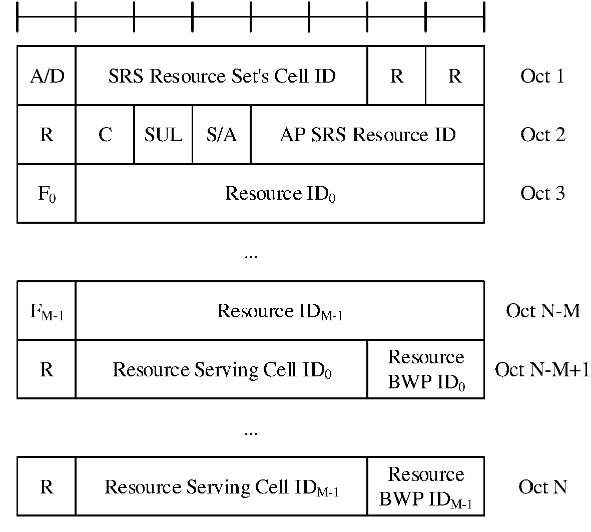

The MAC CE in the method 200 and method 300 may further include indication information, and the indication information indicates whether the MAC CE is configured per the CC list (per CClist) or per the BWP (per BWP).

The MAC CE including the indication information is as shown below.

### Case 1: TCI States Activation/Deactivation for UE-specific PDSCH MAC CE

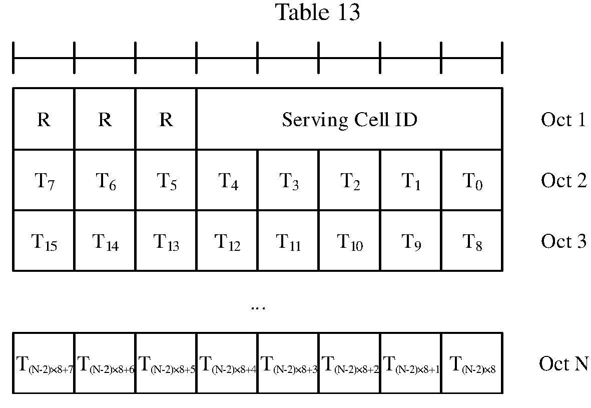

The meanings of the fields in the table 13 are as follows.

Serving Cell ID: an ID of a serving cell, that is, CC ID. A length of the field is five bits. This field is the indication information which indicates that the MAC CE is configured per the CC list (per CClist).

Tᵢ: if there is a TCI state with a TCI state IDi as specified in TS 38.331, this field indicates the activation/deactivation state of the TCI state with the TCI state IDi, otherwise the MAC entity should ignore this field (Tᵢ). Tᵢ set to "1" indicates that the TCI state with the TCI state IDi should be activated and mapped to the codepoint of the DCI transmission configuration indication field, as shown in TS 38.214. Tᵢ set to "0" indicates that the TCI state with the TCI state IDi should be deactivated and not mapped to the codepoint of the DCI transmission configuration indication field. The above codepoint to which the TCI state is mapped is determined by a sequential position of the TCI state in all TCI states for which the Tᵢ field is set to "1", that is, the TCI state for which the first Tᵢ field is set to "1" should be mapped to the codepoint value 0, and the TCI state for which the second Tᵢ field is set to "1" should be mapped to the codepoint value 1, and so on. The maximum number of activated TCI states is eight.

R: a reserved bit, set to "0".

The MAC CE shown in the table 13 includes the serving cell ID field, which is the CC ID, and all CCs in the CC list to which the CC indicated by the CC ID belongs use the PDSCH TCI state activated or deactivated by the MAC CE as shown in the table 13. Since the above-mentioned MAC CE includes the serving cell ID, the PDSCH TCI state indicated by the MAC CE can be used by the CC list to which the serving cell ID belongs, and the network device does not need to indicate the PDSCH TCI state corresponding to the BWP one by one. Therefore, it has higher efficiency and lower signaling overhead.

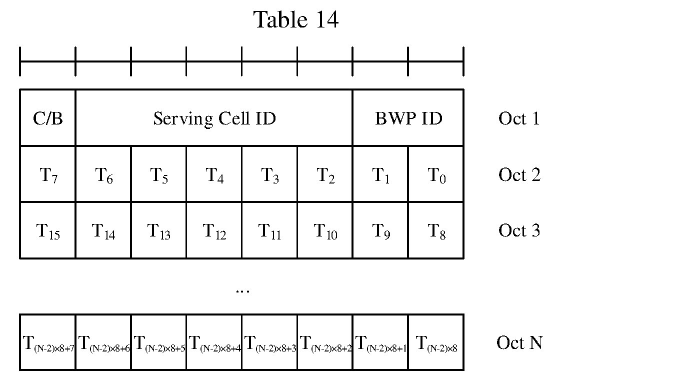

In some embodiments, the network device may also use the MAC CE as shown in table 14 to instruct the terminal device.

In the table 14, the C/B field is used to indicate whether the MAC CE shown in the table 14 is configured per the CC list (per CClist) or per the BWP (per BWP). The meanings of the remaining fields are the same as those of the corresponding fields in the table 13.

When the C/B field indicates that the MAC CE shown in the table 14 is a MAC CE configured per the CC list, the terminal device ignores the BWP ID. Since the PDSCH TCI state indicated by the MAC CE can be used by the CC list to which the serving cell belongs, the network device does not need to indicate the PDSCH TCI state corresponding to each BWP, so it has higher efficiency and lower signaling overhead.

### Case 2: TCI State Indication for UE-specific PDCCH MAC CE

The network device can instruct the terminal device through the MAC CE shown in table 15.

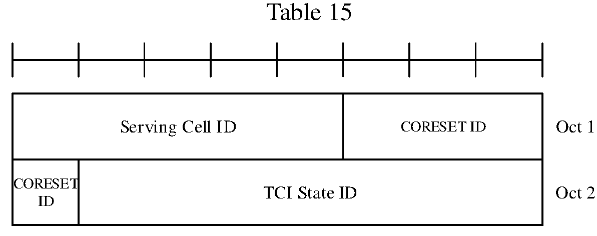

The meanings of the fields in the table 15 are as follows.

Serving Cell ID: this field indicates an identifier of a serving cell to which MAC CE is applied. A length of the field is five bits.

CORESET ID: this field indicates a control resource set identified by *ControlResourceSetId,* as shown in TS 38.331, for which the TCI state is indicated. If the value of this field is 0, this field refers to the control resource set configured by *controlResourceSetZero* specified in TS 38.331. A length of the field is four bits.

TCI State ID: this field indicates the TCI state identified by the *TCI-StateId* specified in TS 38.331 that applies to the control resource set identified by the CORESET ID field. If the CORESET ID field is set to 0, the field (TCI State ID) indicates the *TCI-StateId* of the TCI states in the first 64 TCI states configured by *tci-States-ToAddModList* and *tci-States-ToReleaseList* in *PDSCH-Config* in the activated BWP. If the CORESET ID field is set to a value other than 0, the field (TCI State ID) indicates the *TCI-StateId* configured by the *tci-StatesPDCCH-ToAddList* and *tci-StatesPDCCH-ToReleaseList* in the *controlResourceSet* identified by the specified CORESET ID.

A header of the MAC CE shown in the table 15 contains a logical channel (LC) ID, which is not shown in the table 15. The network device and the terminal device can determine the content indicated by the LCID in a predefined manner. For example, the network device and the terminal device can determine, based on the header of the MAC CE containing LCID1 as the LCID, that the MAC CE is configured per the CClist, or the network device and the terminal device can determine, based on the header of the MAC CE containing LCID2 as the LCID, that the MAC CE is configured per the CORESET.

When the LCID indicates that the MAC CE shown in Table 15 is a MAC CE configured per the CC list, the terminal device ignores the CORESET ID. Since the PDSCH TCI state indicated by the MAC CE can be used by the CC list to which the serving cell belongs, the network device does not need to indicate the PDSCH TCI state corresponding to each BWP, so it has higher efficiency and lower signaling overhead.

In the following, another method for activating or deactivating a SRS resource (or a SRS resource set) provided by the present application is further introduced.

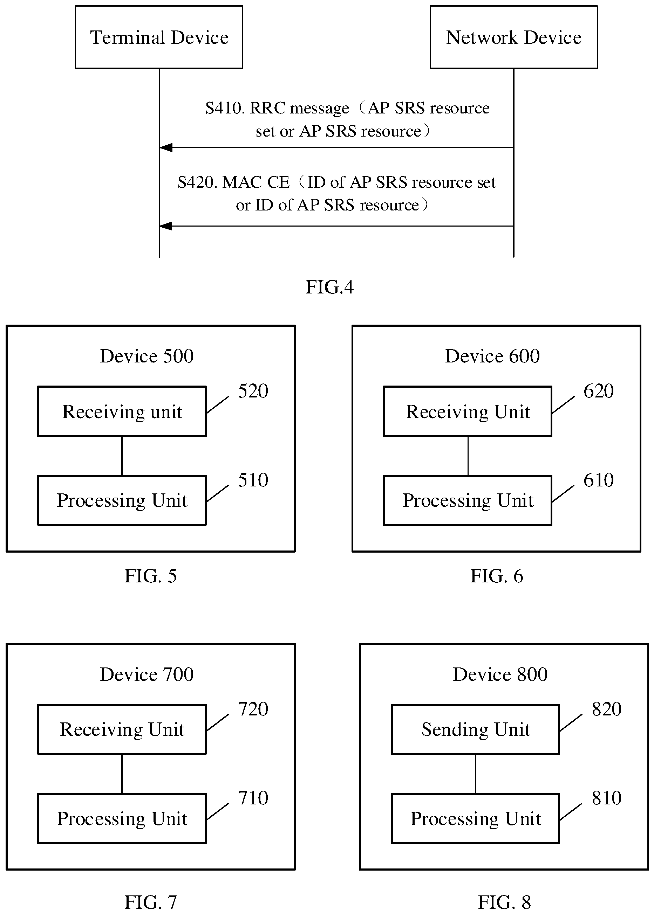

As shown in FIG. 4, the method includes the following.

In S410, the terminal device receives a RRC message, and the RRC message is used to configure an AP SRS resource set or an AP SRS resource.

For the method for configuring the AP SRS resource set or the AP SRS resource through the RRC message by the network device, reference can be made to the related content in the prior art, which will not be repeated here.

In S420, the terminal device receives a MAC CE, wherein,
the MAC CE includes an ID of an aperiodic SRS resource set, and the MAC CE is used to activate or deactivate the aperiodic SRS resource set; or
the MAC CE includes an ID of an aperiodic SRS resource, and the MAC CE is used to activate or deactivate the aperiodic SRS resource.

In some embodiments, the MAC CE further includes the ID of the BWP, and when the MAC CE includes the ID of the aperiodic SRS resource set, there is a correspondence between the BWP and the aperiodic SRS resource set; and when the MAC CE includes the ID of the aperiodic SRS resource, there is a correspondence between the BWP and the aperiodic SRS resource.

The content of the above-mentioned MAC CE is as shown in the following table.

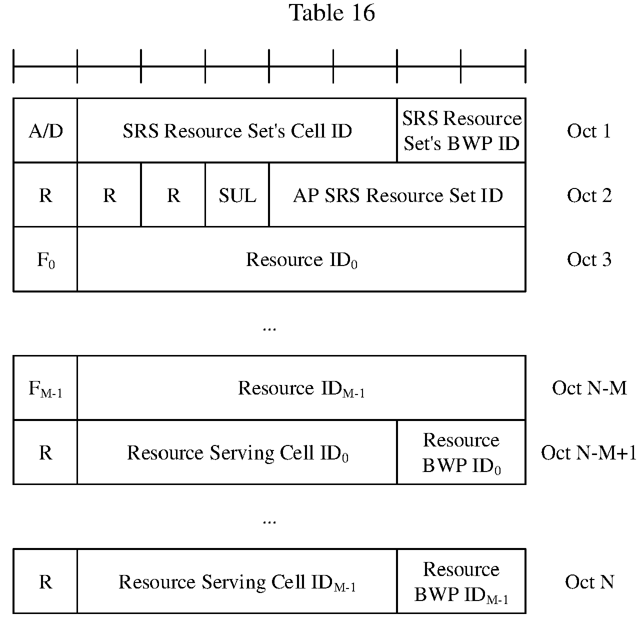

The meanings of the fields in the table 16 are as follows.

SRS Resource Set's Cell ID: this field indicates an identity of a serving cell, and the serving cell contains the activated/deactivated AP SRS resource set. A length of this field is five bits.

SRS Resource Set's BWP ID: this field indicates an uplink BWP as the codepoint of the DCI *bandwith part indicator* field as specified in TS 38.212. The uplink BWP contains the activated/deactivated SP SRS resource set. A length of this field is two bits.

AP SRS Resource Set ID: this field indicates an ID of the AP SRS resource set identified by *SRS-ResourceSetId* as specified in TS 38.331, and the AP SRS resource set is to be activated or deactivated. A length of the field is four bits.

The meanings of the remaining fields in the table 16 are the same as those of the corresponding fields in the table 1.

Since the network device activates or deactivates the AP SRS resource set or the AP SRS resource through the MAC CE, it reduces a delay of generating information and improves efficiency of activating or deactivating the AP SRS resource set or the AP SRS resource compared to the method in which the AP SRS resource set is activated or deactivated through a RRC message.

The above describes in detail examples of the method for activating or deactivating the SRS resource provided in the present application. It can be understood that in order to implement the above-mentioned functions, a communication device that activates or deactivates the SRS resource includes corresponding hardware structures and/or software modules for carrying out the functions. Those skilled in the art will readily appreciate that the present application can be embodied in hardware or a combination of hardware and computer software in connection with elements and algorithm steps of the various examples described in the embodiments disclosed herein. Whether a function is implemented in hardware or by computer software driving hardware depends on the specific application and design constraints of the technical solution. The skilled person can use a different method for each specific application to implement the described functions, but such implementations should not be considered as going beyond the scope of the present application.

In the present application, functional units of the communication device for activating or deactivating the SRS resource can be divided according to the above-mentioned method examples. For example, respective functional units can be divided per respective functions, or two or more functions may be integrated in one processing unit. The above integrated unit may be implemented in hardware, or may be implemented in a software function unit. It should be noted that the division of the units in embodiments of the present application is illustrative, and is merely a division of logical functions, and there may be other division manners in actual implementations.

FIG. 5 is a schematic structural diagram of another communication device for activating or deactivating a SRS resource provided by the present application. The device 500 includes a processing unit 510 and a receiving unit 520, and the receiving unit 520 can perform the receiving step under control of the processing unit 510.

The communication unit 520 is configured to receive a MAC CE, where the MAC CE includes an ID of a CC set, wherein,
the MAC CE further includes an ID of at least one SRS resource, and is used to activate or deactivate the at least one SRS resource corresponding to the CC set; or
the MAC CE further includes an ID of an SRS resource set, and is used to activate or deactivate the SRS resource set corresponding to the CC set.

In some embodiments, when the MAC CE includes the ID of the at least one SRS resource, the ID of the at least one SRS resource is an ID of an aperiodic SRS resource or an ID of a semi-persistent SRS resource.

In some embodiments, the MAC CE further includes first indication information, and the first indication information is used to indicate that the ID of the at least one SRS resource is the ID of the aperiodic SRS resource or the ID of the semi-persistent SRS resource.

In some embodiments, when the MAC CE includes the ID of the SRS resource set, the ID of the SRS resource set is an ID of an aperiodic SRS resource set or an ID of a semi-persistent SRS resource set.

In some embodiments, the MAC CE further includes second indication information, and the second indication information is used to indicate that the ID of the SRS resource set is the ID of the aperiodic SRS resource set or the ID of the semi-persistent SRS resource set.

In some embodiments, the MAC CE further includes third indication information, and the third indication information is used to indicate that there is a correspondence between the MAC CE and the CC set.

In some embodiments, the third indication information is an ID of a CC in the CC set, or the third indication information is an ID of a serving cell to which the CC in the CC set belongs, or the third indication information is a logical channel identifier (LCID) located in a header of the MAC CE.

In some embodiments, the CC set is a CC list.

For a specific manner in which the device 500 performs the method for activating or deactivating the SRS resource and the beneficial effects thereof, reference may be made to related descriptions in the method embodiments.

FIG. 6 is a schematic structural diagram of another communication device for activating or deactivating a SRS resource provided by the present application. The device 600 includes a processing unit 610 and a receiving unit 620, and the receiving unit 620 can perform the receiving step under control of the processing unit 610.

The communication unit 620 is configured to receive a MAC CE, where the MAC CE includes an ID of a CC, wherein,
the MAC CE further includes an ID of at least one SRS resource, and is used to activate or deactivate the at least one SRS resource corresponding to a CC set to which the CC belongs; or
the MAC CE further includes an ID of an SRS resource set, and is used to activate or deactivate the SRS resource set corresponding to the CC set to which the CC belongs.

In some embodiments, when the MAC CE includes the ID of the at least one SRS resource, the ID of the at least one SRS resource is an ID of an aperiodic SRS resource or an ID of a semi-persistent SRS resource.

In some embodiments, the MAC CE further includes first indication information, and the first indication information is used to indicate that the ID of the at least one SRS resource is the ID of the aperiodic SRS resource or the ID of the semi-persistent SRS resource.

In some embodiments, when the MAC CE includes the ID of the SRS resource set, the ID of the SRS resource set is an ID of an aperiodic SRS resource set or an ID of a semi-persistent SRS resource set.

In some embodiments, the MAC CE further includes second indication information, and the second indication information is used to indicate that the ID of the SRS resource set is the ID of the aperiodic SRS resource set or the ID of the semi-persistent SRS resource set.

In some embodiments, the ID of the CC is an ID of a serving cell.

In some embodiments, the MAC CE further includes third indication information, and the third indication information is used to indicate that there is a correspondence between the MAC CE and the CC set.

In some embodiments, the third indication information is an ID of a CC in the CC set, or the third indication information is an ID of a serving cell to which the CC in the CC set belongs, or the third indication information is a logical channel identifier (LCID) located in a header of the MAC CE.

In some embodiments, the CC set is a CC list.

For a specific manner in which the device 600 performs the method for activating or deactivating the SRS resource and the beneficial effects thereof, reference may be made to related descriptions in the method embodiments.

FIG. 7 is a schematic structural diagram of another communication device for activating or deactivating a SRS resource provided by the present application. The device 700 includes a processing unit 710 and a receiving unit 720, and the receiving unit 720 can perform the receiving step under control of the processing unit 710.

The communication unit 720 is configured to receive a MAC CE, wherein,
the MAC CE includes an ID of an aperiodic SRS resource set, and is used to activate or deactivate the aperiodic SRS resource set; or,
the MAC CE includes an ID of an aperiodic SRS resource, and is used to activate or deactivate the aperiodic SRS resource.

In some embodiments, the MAC CE further includes an ID of a BWP, and when the MAC CE includes the ID of the aperiodic SRS resource set, there is a correspondence between the BWP and the aperiodic SRS resource set; and when the MAC CE includes the ID of the aperiodic SRS resource, there is a correspondence between the BWP and the aperiodic SRS resource.

For a specific manner in which the device 700 performs the method for activating or deactivating the SRS resource and the beneficial effects thereof, reference may be made to related descriptions in the method embodiments.

FIG. 8 is a schematic structural diagram of another communication device for activating or deactivating a SRS resource provided by the present application. The device 800 includes a processing unit 810 and a sending unit 820, and the sending unit 820 can perform the sending step under control of the processing unit 810.

The sending unit 820 is configured to send a MAC CE, where the MAC CE includes an ID of a CC set, wherein,
the MAC CE further includes an ID of at least one SRS resource, and is used to activate or deactivate the at least one SRS resource corresponding to the CC set; or
the MAC CE further includes an ID of an SRS resource set, and is used to activate or deactivate the SRS resource set corresponding to the CC set.

In some embodiments, when the MAC CE includes the ID of the at least one SRS resource, the ID of the at least one SRS resource is an ID of an aperiodic SRS resource or an ID of a semi-persistent SRS resource.

In some embodiments, the MAC CE further includes first indication information, and the first indication information is used to indicate that the ID of the at least one SRS resource is the ID of the aperiodic SRS resource or the ID of the semi-persistent SRS resource.

In some embodiments, when the MAC CE includes the ID of the SRS resource set, the ID of the SRS resource set is an ID of an aperiodic SRS resource set or an ID of a semi-persistent SRS resource set.

In some embodiments, the MAC CE further includes second indication information, and the second indication information is used to indicate that the ID of the SRS resource set is the ID of the aperiodic SRS resource set or the ID of the semi-persistent SRS resource set.

In some embodiments, the MAC CE further includes third indication information, and the third indication information is used to indicate that there is a correspondence between the MAC CE and the CC set.

In some embodiments, the third indication information is an ID of a CC in the CC set, or the third indication information is an ID of a serving cell to which the CC in the CC set belongs, or the third indication information is a logical channel identifier (LCID) located in a header of the MAC CE.

In some embodiments, the CC set is a CC list.

In some embodiments, the CC set is configured by a RRC message.

For a specific manner in which the device 800 performs the method for activating or deactivating the SRS resource and the beneficial effects thereof, reference may be made to related descriptions in the method embodiments.

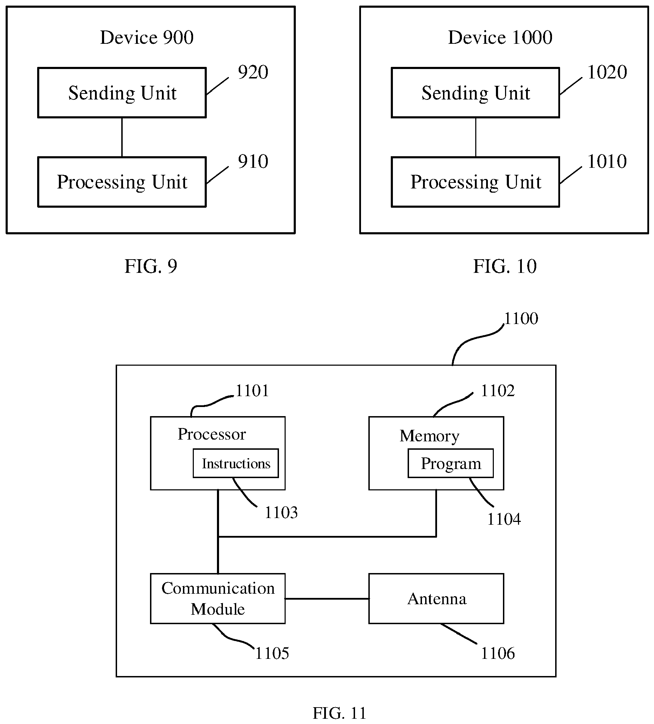

FIG. 9 is a schematic structural diagram of another communication device for activating or deactivating a SRS resource provided by the present application. The device 900 includes a processing unit 910 and a sending unit 920, and the sending unit 920 can perform the sending step under control of the processing unit 910.

The sending unit 920 is configured to send a MAC CE, and the MAC CE includes an identifier (ID) of a CC, wherein,
the MAC CE further includes an ID of at least one SRS resource, and is used to activate or deactivate the at least one SRS resource corresponding to a CC set to which the CC belongs; or
the MAC CE further includes an ID of an SRS resource set, and is used to activate or deactivate the SRS resource set corresponding to the CC set to which the CC belongs.

In some embodiments, when the MAC CE includes the ID of the at least one SRS resource, the ID of the at least one SRS resource is an ID of an aperiodic SRS resource or an ID of a semi-persistent SRS resource.

In some embodiments, the MAC CE further includes first indication information, and the first indication information is used to indicate that the ID of the SRS resource is the ID of the aperiodic SRS resource or the ID of the semi-persistent SRS resource.

In some embodiments, when the MAC CE includes the ID of the SRS resource set, the ID of the SRS resource set is an ID of an aperiodic SRS resource set or an ID of a semi-persistent SRS resource set.

In some embodiments, the MAC CE further includes second indication information, and the second indication information is used to indicate that the ID of the SRS resource set is the ID of the aperiodic SRS resource set or the ID of the semi-persistent SRS resource set.

In some embodiments, the ID of the CC is an ID of a serving cell.

In some embodiments, the MAC CE further includes third indication information, and the third indication information is used to indicate that there is a correspondence between the MAC CE and the CC set.

In some embodiments, the third indication information is an ID of a CC in the CC set, or the third indication information is an ID of a serving cell to which the CC in the CC set belongs, or the third indication information is a logical channel identifier (LCID) located in a header of the MAC CE.

In some embodiments, the CC set is a CC list.

In some embodiments, the CC set is configured by a RRC message.

For a specific manner in which the device 900 performs the method for activating or deactivating the SRS resource and the beneficial effects thereof, reference may be made to related descriptions in the method embodiments.

FIG. 10 is a schematic structural diagram of another communication device for activating or deactivating a SRS resource provided by the present application. The device 1000 includes a processing unit 1010 and a sending unit 1020, and the sending unit 1020 can perform the sending step under control of the processing unit 1010.

The sending unit 1020 is configured to send a MAC CE, wherein,
the MAC CE includes an ID of an aperiodic sounding reference signal (SRS) resource set, and is used to activate or deactivate the aperiodic SRS resource set; or
the MAC CE includes an ID of an aperiodic SRS resource, and is used to activate or deactivate the aperiodic SRS resource.

In some embodiments, the MAC CE further includes an ID of a BWP, and when the MAC CE includes the ID of the aperiodic SRS resource set, there is a correspondence between the BWP and the aperiodic SRS resource set; and when the MAC CE includes the ID of the aperiodic SRS resource, there is a correspondence between the BWP and the aperiodic SRS resource.

For a specific manner in which the device 1000 performs the method for activating or deactivating the SRS resource and the beneficial effects thereof, reference may be made to related descriptions in the method embodiments.

FIG. 11 is a schematic structural diagram of a communication device provided by the present application. The device 1100 may be configured to perform the method described in the above method embodiments. The device 1100 may be a terminal device, a network device, or a chip.

The device 1100 includes one or more processors 1101. The one or more processors 1101 may support the device 1100 to perform the methods according to the method embodiments corresponding to FIGS. 2 to 4. The processor 1101 may be a general-purpose processor or a dedicated processor. For example, the processor 1101 may be a Central Processing Unit (CPU). The CPU may be configured to control the device 1100, execute a software program, and process data of the software program. The device 1100 may further include a communication module 1105 for implementing signal input (receiving) and output (transmitting).

For example, the device 1100 may be a chip. The communication module 1105 may be an input and/or output circuit of the chip, or the communication module 1105 may be a communication interface of the chip. The chip may be embodied as a component of the terminal device or the network device or other wireless communication devices.

For another example, the device 1100 may be a terminal device or a network device. The communication module 1105 may be a transceiver of the terminal device or the network device, or the communication module 1105 may be a transceiver circuit of the terminal device or the network device.

The device 1100 may include one or more memories 1102 having a program 1104 stored thereon. The program 1104 may be executed by the processor 1101 to generate instructions 1103, such that the processor 1101 performs the methods described in the above method embodiments in accordance with the instructions 1103. In some embodiment, data may also be stored in the memory 1102. In some embodiment, the processor 1101 may also read data stored in the memory 1102. The data may be stored either at the same storage address as the program 1104, or at a storage address different from that of the program 1104.

The processor 1101 and the memory 1102 may be arranged separately or integrated together. For example, the processor 1101 and the memory 1102 may be integrated on a System on Chip (SoC) of the terminal device.

The device 1100 may further include an antenna 1106. The communication module 1105 is configured to implement a transceiving function of the device 1100 through the antenna 1106.

For a specific manner in which the processor 1101 performs the method for activating or deactivating the SRS resource, reference may be made to related descriptions in the method embodiments.

It should be understood that the steps of the above method embodiments can be implemented by hardware logic circuits or instructions in a form of software in the processor 1101. The processor 1101 can be a CPU, a Digital Signal Processor (DSP), an Application Specific Integrated Circuit (ASIC), a Field Programmable Gate Array (FPGA) or another programmable logic device, such as a discrete gate, a transistor logic device, or a discrete hardware component.

The present application also provides a computer program product. The computer program product, when being executed by the processor 1101, carries out the method according to any of the method embodiments of the present application.

The computer program product such as the program 1104 may be stored in the memory 1102. The program 1104 is subjected to process such as preprocessing, compilation, assembly, and linking and is finally converted into an executable object file that can be executed by the processor 1101.

The present application also provides a computer-readable storage medium having a computer program stored thereon. The computer program, when being executed by a computer, carries out the method according to any of the method embodiments of the present application. The computer program can be a high-level language program or an executable object program.

The computer-readable storage medium may be, for example, the memory 1102. The memory 1102 may be a volatile memory or a non-volatile memory, or the memory 1102 may include both a volatile memory and a non-volatile memory. The non-volatile memory can be a Read-Only Memory (ROM), a Programmable ROM (PROM), an Erasable PROM (EPROM), an Electrically EPROM (EEPROM) or a flash memory. The volatile memory may be a Random Access Memory (RAM), which is used as an external cache. By way of exemplary rather than limiting description, many forms of RAM can be used, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM).

Those skilled in the art can clearly understand that, for the specific operation processes of the device and apparatus described above and the technical effects thereof, reference can be made to the corresponding processes and technical effects in the foregoing method embodiments, which will not be repeated here for convenience and conciseness of the description.

In several embodiments provided by the present application, the system, device and method disclosed can be implemented in other ways. The device embodiments described above are merely exemplary, and the division of the units is only division of logical functions, and there may be other divisions in actual implementations. Multiple units or components may be combined or integrated into another system. In addition, coupling between the units or coupling between the components may be direct coupling or indirect coupling, and the above coupling includes electrical, mechanical, or other forms of connection.

It should be understood that in various embodiments of the present application, the values of the sequence numbers of the above processes do not imply the order in which they are performed. The order in which the processes are performed should be determined by the functions and internal logic thereof, and should not limit he implementation processes of the embodiments of the present application.

In addition, the terms "system" and "network" are often used interchangeably herein. The term "and/or" as used herein is only used for describing an association relationship between associated objects, which represents that there can be three kinds of relationships. For example, "A and/or B" can indicate three cases where A exists alone, A and B exist at the same time, and B exists alone. In addition, the character "/" as used herein generally indicates that the associated objects before and after this character are in an "or" relationship.

In sum, the scope of the present invention is determined by the scope of the appended claims.

## Claims

1. A method for activating or deactivating a sounding signal resource, comprising:
sending (S320), by a network device, a media access control control element, MAC CE, the MAC CE comprising an identifier, ID, of a component carrier, CC,
wherein, the MAC CE further comprises an ID of at least one sounding reference signal, SRS, resource, the ID of the at least one SRS resource is an aperiodic SRS resource ID or a semi-persistent SRS resource ID,
the method being **characterized in that**:
the MAC CE is configured to activate or deactivate the at least one SRS resource corresponding to a CC set to which the CC belongs, the CC set comprises at least two CCs, and the ID of the CC indicates that all CCs in the CC set to which the CC belongs use the MAC CE to activate or deactivate the SRS resource.

2. The method according to claim 1, wherein the ID of the CC is an ID of a serving cell.

3. A network device for activating or deactivating a sounding signal resource, comprising a sending unit (920), configured to:
send a media access control control element, MAC CE, the MAC CE comprising an identifier, ID, of a component carrier, CC,
wherein, the MAC CE further comprises an ID of at least one sounding reference signal, SRS, resource, the ID of the at least one SRS resource is an aperiodic SRS resource ID or a semi-persistent SRS resource ID, the network device being **characterized in that**:
the MAC CE is configured to activate or deactivate the at least one SRS resource corresponding to a CC set to which the CC belongs, the CC set comprises at least two CCs, and the ID of the CC indicates that all CCs in the CC set to which the CC belongs use the MAC CE to activate or deactivate the SRS resource.

4. The network device according to claim 3, wherein the ID of the CC is an ID of a serving cell.

5. A computer-readable storage medium, configured to store a computer program, wherein the computer program comprises instructions, which when executed by a computer, cause the computer to perform the method according to any one of claims 1 or 2.

## Patentansprüche

1. Verfahren zum Aktivieren oder Deaktivieren einer Sondierungssignalressource, umfassend:
Senden (S320), durch eine Netzvorrichtung, eines Medienzugriffssteuerung-Steuerelements, MAC-CE, wobei das MAC-CE eine Kennung, ID, eines Komponententrägers, CC, umfasst, wobei das MAC-CE ferner eine ID mindestens einer Sondierungsreferenzsignal- bzw. SRS-Ressource umfasst, wobei die ID der mindestens einen SRS-Ressource eine aperiodische SRS-Ressourcen-ID oder eine semipersistente SRS-Ressourcen-ID ist, wobei das Verfahren **dadurch gekennzeichnet ist, dass**:
das MAC-CE ausgelegt ist zum Aktivieren oder Deaktivieren der mindestens einen SRS-Ressource entsprechend einem CC-Satz, zu dem der CC gehört, der CC-Satz mindestens zwei CCs umfasst und die ID des CC angibt, dass alle CCs in dem CC-Satz, zu dem der CC gehört, das MAC-CE zum Aktivieren oder Deaktivieren der SRS-Ressource verwenden.

2. Verfahren nach Anspruch 1, wobei die ID des CC eine ID einer Serving-Zelle ist.

3. Netzvorrichtung zum Aktivieren oder Deaktivieren einer Sondierungssignalressource, umfassend eine Sendeeinheit (920), die zu Folgendem ausgelegt ist:
Senden eines Medienzugriffssteuerung-Steuerelements, MAC-CE, wobei das MAC-CE eine Kennung, ID, eines Komponententrägers, CC, umfasst, wobei das MAC-CE ferner eine ID mindestens einer Sondierungsreferenzsignal- bzw. SRS-Ressource umfasst, wobei die ID der mindestens einen SRS-Ressource eine aperiodische SRS-Ressourcen-ID oder eine semipersistente SRS-Ressourcen-ID ist, wobei die Netzvorrichtung **dadurch gekennzeichnet ist, dass**:
das MAC-CE ausgelegt ist zum Aktivieren oder Deaktivieren der mindestens einen SRS-Ressource entsprechend einem CC-Satz, zu dem der CC gehört, der CC-Satz mindestens zwei CCs umfasst und die ID des CC angibt, dass alle CCs in dem CC-Satz, zu dem der CC gehört, das MAC-CE zum Aktivieren oder Deaktivieren der SRS-Ressource verwenden.

4. Netzvorrichtung nach Anspruch 3, wobei die ID des CC eine ID einer Serving-Zelle ist.

5. Computerlesbares Speichermedium, ausgelegt zum Speichern eines Computerprogramms, wobei das Computerprogramm Anweisungen umfasst, die bei Ausführung durch einen Computer bewirken, dass der Computer das Verfahren nach einem der Ansprüche 1 oder 2 durchführt.

## Revendications

1. Procédé pour activer ou désactiver une ressource de signal de sondage, comprenant :
l'envoi (S320), par un dispositif de réseau, d'un élément de commande de contrôle d'accès au support, CE de MAC, le CE de MAC comprenant un identifiant, ID, d'une porteuse composante, CC,
dans lequel, le CE de MAC comprend en outre un ID d'au moins une ressource de signal de référence de sondage, SRS, l'ID de l'au moins une ressource de SRS est un ID de ressource de SRS apériodique ou un ID de ressource de SRS semi-persistante,
le procédé étant **caractérisé en ce que** :
le CE de MAC est configuré pour activer ou désactiver l'au moins une ressource de SRS correspondant à un ensemble de CC auquel la CC appartient, l'ensemble de CC comprend au moins deux CC, et l'ID de la CC indique que toutes les CC dans l'ensemble de CC auquel la CC appartient utilisent le CE de MAC pour activer ou désactiver la ressource de SRS.

2. Procédé selon la revendication 1, dans lequel l'ID de la CC est un ID d'une cellule de desserte.

3. Dispositif de réseau pour activer ou désactiver une ressource de signal de sondage, comprenant une unité d'envoi (920), configurée pour :
envoyer un élément de commande de contrôle d'accès au support, CE de MAC, le CE de MAC comprenant un identifiant, ID, d'une porteuse composante, CC,
dans lequel, le CE de MAC comprend en outre un ID d'au moins une ressource de signal de référence de sondage, SRS, l'ID de l'au moins une ressource de SRS est un ID de ressource de SRS apériodique ou un ID de ressource de SRS semi-persistante, le dispositif de réseau étant **caractérisé en ce que** :
le CE de MAC est configuré pour activer ou désactiver l'au moins une ressource de SRS correspondant à un ensemble de CC auquel la CC appartient, l'ensemble de CC comprend au moins deux CC, et l'ID de la CC indique que toutes les CC dans l'ensemble de CC auquel la CC appartient utilisent le CE de MAC pour activer ou désactiver la ressource de SRS.

4. Dispositif de réseau selon la revendication 3, dans lequel l'ID de la CC est un ID d'une cellule de desserte.

5. Support de stockage lisible par ordinateur, configuré pour stocker un programme d'ordinateur, dans lequel le programme d'ordinateur comprend des instructions, qui, lorsqu'elles sont exécutées par un ordinateur, font en sorte que l'ordinateur réalise le procédé selon l'une quelconque des revendications 1 ou 2.
